# EUROPÄISCHE PATENTSCHRIFT

(11) **EP 1 980 728 B1**
(45) Veröffentlichungstag und Bekanntmachung des Hinweises auf die Patenterteilung: **18.11.2009**
(21) Anmeldenummer: 08153204.6
(22) Anmeldetag: 25.03.2008
(51) Int. Cl.: F01N 7/18, B21D 22/20, B21D 39/03, B21D 53/88, B21D 35/00, B62D 21/00, B62D 21/09

(54) **Tiefziehblechbauteil in Schalenbauweise**
Deep drawing sheet metal part in monocoque construction
Composant de tôle d'emboutissage dans une structure à coque

(30) Priorität: 12.04.2007 DE 102007017661
(43) Veröffentlichungstag der Anmeldung: 15.10.2008
(73) Patentinhaber: J. Eberspächer GmbH & Co. KG, 73730 Esslingen (DE)
(72) Erfinder: Junk, Stefan, 66123 Saarbrücken (DE); Grün, Tobias, 66773 Schwalbach (DE); Gerlich, Harald, 66578 Schiffweiler (DE); Baldes, Rolf, 66229 Freisen (DE); Kaldenhoff, Carsten, 66440 Blieskastel (DE)
(74) Vertreter: Bongen, Renaud & Partner

(56) Entgegenhaltungen:
- EP-A- 1 195 208
- WO-A-01/51781
- DE-A1- 4 307 563
- DE-A1- 10 136 433
- DE-A1- 10 246 164
- DE-A1- 10 353 479
- DE-A1- 19 653 543
- DE-A1- 19 704 300
- DE-A1- 19 835 997

## Beschreibung

Die vorliegende Erfindung betrifft ein Tiefziehblechbauteil in Schalenbauweise, insbesondere für eine Abgasanlage, mit den Merkmalen des Oberbegriffs des Anspruchs 1. Die Erfindung betrifft außerdem eine Platine zur Herstellung eines derartigen Tiefziehblechbauteils sowie einen Coil zur Herstellung von Platinen.

Tiefziehblechbauteile, die in Schalenbauweise ausgeführt sind, kommen in vielen technischen Gebieten zur Anwendung. Beispielsweise werden die Gehäuse von Schalldämpfern, Katalysatoren, Partikelfiltern aus tiefgezogenen Schalenkörpern zusammengebaut. Ebenso kann beispielsweise ein Kraftstofftank oder ein beliebiger anderer Behälter in Schalenbauweise aus tiefgezogenen Blechschalenkörpern hergestellt sein.

Ein derartiges Tiefziehblechbauteil weist zumindest einen einteiligen Schalenkörper auf, der durch Tiefziehen aus einem ebenen Blechkörper hergestellt ist. Ein derartiger Blechkörper wird auch als Platine bezeichnet. Üblicherweise werden die Platinen in Form eines Blechbands bereitgestellt, das auf einer Rolle aufgewickelt ist. Das aufgewickelte Blechband wird auch als Coil bezeichnet.

Insbesondere bei Großserienprodukten, wie sie in der Fahrzeugindustrie die Regel sind, wird permanent versucht, die Herstellungskosten zu senken. Desweiteren wird in der Fahrzeugindustrie permanent versucht, das Bauteilgewicht zu reduzieren. Um diese Ziele auch bei Tiefziehblechbauteilen realisieren zu können, können sogenannte "Tailored Strips" oder sogenannte "Tailored Blanks" zur Anwendung kommen. Hierbei handelt es sich um Coils bzw. um Platinen, die aus mehreren Blechstücken zusammengefügt sind, beispielsweise mittels hochentwickelter Laserschweißtechnik. Dabei können die einzelnen in der Abwicklungsrichtung des jeweiligen Coils nebeneinander liegenden Blechstreifen unterschiedliche Blechdicken bzw. Blechstärken aufweisen. Hierdurch lassen sich Bauteilgewicht und Bauteilkosten einsparen.

Aus der DE 101 36 433 A1 ist ein Tiefziehblechbauteil in Schalenbauweise bekannt, das wenigstens einen einteiligen Schalenkörper umfasst, der durch Tiefziehen aus einer Platine hergestellt ist, wobei diese Platine zumindest einen ersten Bereich und zumindest einen zweiten Bereich aufweist, wobei einer dieser Bereiche durch einen mehrlagigen Verband gebildet ist, der zumindest zwei übereinander angeordnete Blechstücke aufweist. Beim bekannten Tiefziehblechbauteil besteht die Platine aus einem durchgehenden ersten Blechstück, das sich über die ersten Bereiche und über die zweiten Bereiche erstreckt. Auf dieses erste Blechstück ist ausschließlich im zweiten Bereich ein zweites Blechstück aufgelegt und durch Schweißpunkte mit dem ersten Blechstück verbunden. Im zweiten Bereich kann zwischen den Blechstücken ein Zwischenelement angeordnet sein.

Die vorliegende Erfindung beschäftigt sich mit dem Problem, für ein Tiefziehblechbauteil der eingangs genannten Art bzw. für eine Platine der eingangs genannten Art bzw. für einen Coil der eingangs genannten Art eine verbesserte oder zumindest eine andere Ausführungsform anzugeben, die sich durch eine verbesserte Anpassung des Tiefziehblechbauteils an daran angreifende Belastungen auszeichnet. Dabei soll eine hinreichende Stabilität bei reduzierten Herstellungskosten und reduziertem Gewicht erzielt werden.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Platine zur Herstellung eines Schalenkörpers so auszugestalten, dass sie durch variierende Materialstärke, Materialverdopplungen, Schichtbauweise und/oder Verbundbauweise eine verbesserte Anpassung des Schalenkörpers an die an das Tiefziehblechbauteil gestellten Anforderungen ermöglicht. Dementsprechend besitzt die Platine zumindest einen ersten Bereich und zumindest einen zweiten Bereich, die auf unterschiedliche Weise ausgestaltet sind.

Gemäß der erfindungsgemäßen Lösung ist zumindest einer der beiden Bereiche durch einen mehrlagigen Verband gebildet, der zumindest zwei übereinander angeordnete Blechstücke aufweist, die zum Herstellen der Platine mit dem Blechstück oder mit den Blechstücken des jeweils anderen Bereichs verschweißt sind. Durch die Verwendung eines derartigen mehrlagigen Verbands ergeben sich zusätzliche Möglichkeiten für die Anpassung des mit der Platine herzustellenden Schalenkörpers bzw. des letztlich herzustellenden Tiefziehblechbauteils an besondere Umgebungsbedingungen. Beispielsweise lassen sich mit einem zweilagigen Verband in einem Schalenkörper eine Innenseite und eine Außenseite aus unterschiedlichen Materialien herstellen, nämlich aus unterschiedlich legierten Blechstücken, um beispielsweise eine bessere Adaption an chemische und/oder thermische Umgebungsbedingungen zu erzielen.

Erfindungsgemäß sind dabei zwei erste Bereich und ein zweiter Bereich vorgesehen, wobei sich die beiden ersten Bereiche beiderseits des zweiten Bereichs erstrecken. Dabei ist nur der zweite Bereich als mehrlagiger Verband ausgestaltet, wobei die Blechstücke des zweiten Bereichs zum Herstellen der Platine mit den Blechstücken der beiden ersten Bereich verschweißt sind. Hierdurch wird eine Platine geschaffen, die in ihrer Fläche nebeneinander einlagige und mehrlagige Bereiche aufweist, die aneinander angebaut sind.

Besonders vorteilhaft ist außerdem das Merkmal, wonach zwischen den beiden Blechstücken des Verbands ein Abstand realisiert wird, der beispielsweise als Luftspaltisolation genutzt werden kann. Ebenso kann dieser Abstand z.B. dazu genutzt werden, um einen Einsatz zwischen den beiden Blechstücken anzuordnen. Hierdurch ergeben sich weitere vielfältige Möglichkeiten zur Adaption des Tiefziehblechbauteils an Umgebungsbedingungen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Draufsicht auf eine nicht vom Schutzbereich der Ansprüche erfassten Platine,
- Fig. 2: eine Seitenansicht der nicht vom Schutzbereich der Ansprüche erfassten Platine entsprechend einer Blickrichtung II in Fig. 1,
- Fig. 3: eine perspektivische Ansicht eines nicht vom Schutzbereich der Ansprüche erfassten Walzwerk- zeugs,
- Fig. 4: eine Seitenansicht eines nicht vom Schutzbereich der Ansprüche erfassten Tiefziehblechbauteils,
- Fig. 5: eine Draufsicht auf eine Platine wie in Fig. 1, jedoch bei anderen nicht vom Schutzbereich der An- sprüche erfassten Ausführungsform,
- Fig. 6: eine Draufsicht wie in Fig. 5, jedoch bei einer erfindungsgemäßen Ausführungsform,
- Fig. 7: eine mögliche Seitenansicht der erfindungsgemäßen Platine entsprechend einer Blickrichtung VII in Fig. 6,
- Fig. 8: eine Ansicht wie in Fig. 7, jedoch bei einer ande- ren erfindungsgemäßen Ausführungsform,
- Fig. 9: eine Ansicht wie in Fig. 4, jedoch bei einer er- findungsgemäßen Ausführungsform.

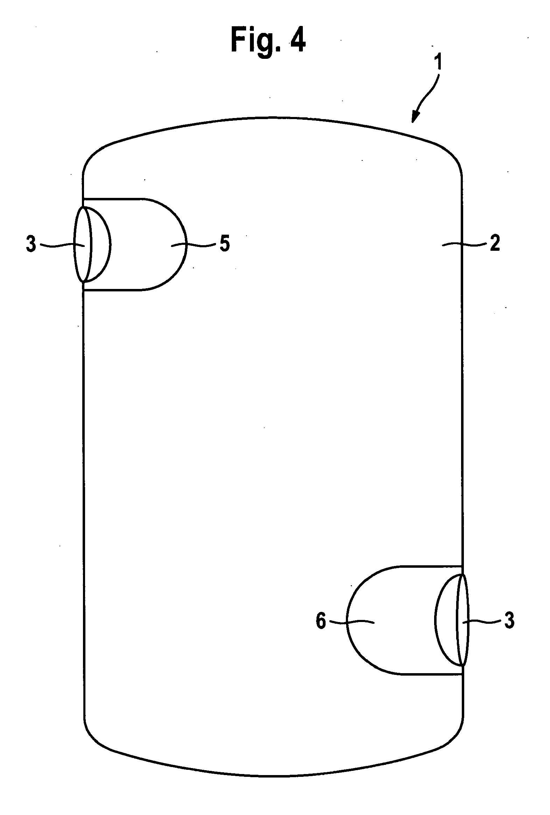

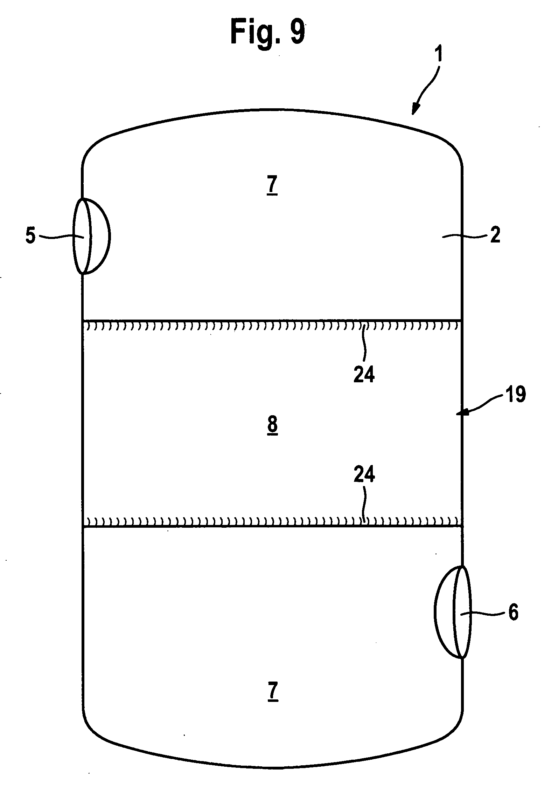

Ein Tiefziehblechbauteil 1, wie es beispielsweise in den Fig. 4 und 9 dargestellt ist, wird bevorzugt in Schalenbauweise ausgeführt, so dass es zumindest einen Schalenkörper 2 bzw. 3 aufweist. Weit verbreitet ist beispielsweise eine Halbschalenbauweise mit zwei Schalenkörpern 2, 3, insbesondere mit einer Oberschale und einer Unterschale. In den Fig. 4 und 9 ist der dem Betrachter zugewandte Schalenkörper 2 vergleichsweise gut erkennbar, während der vom Betrachter abgewandten Schalenkörper 3 nur in Fig. 4 angedeutet ist. Derartige Tiefziehblechbauteile 1 können bevorzugt als Gehäuse ausgestaltet sein. Beispielsweise handelt es sich um das Gehäuse eines Schalldämpfers oder eines Partikelfilters oder eines Katalysators, jeweils einer Abgasanlage für eine Brennkraftmaschine, die insbesondere in einem Kraftfahrzeug angeordnet sein kann.

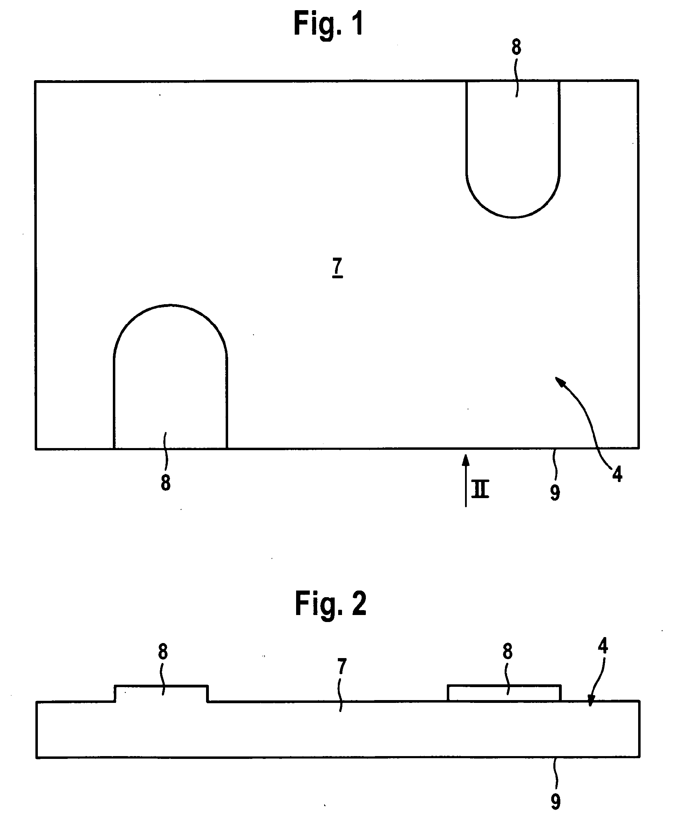

Zumindest einer der Schalenkörper 2, 3 ist einteilig durch Tiefziehen hergestellt. Hierbei wird eine im Ursprungszustand ebene Platine 4, wie sie z.B. in den Fig. 1, 2 und 5 bis 8 dargestellt ist, durch Tiefziehen dreidimensional verformt, um dem jeweiligen Schalenkörper 2, 3 die gewünschte dreidimensionale Gestalt zu geben. Beispielsweise können gemäß den Fig. 4 und 9 am jeweiligen Schalenkörper 2, 3 Anschlussabschnitte 5 und 6 ausgeformt werden, die beispielsweise am fertigen Gehäuse als Einlass und Auslass für Abgas dienen können.

Die Platine 4, die zum Herstellen des einteiligen Schalenkörpers 2, 3 verwendet wird, weist gemäß den Fig. 1, 2 und 5 bis 8 zumindest einen ersten Bereich 7 sowie wenigstens einen zweiten Bereich 8 auf.

Bei der in den Fig. 1 und 2 dargestellten Ausführungsform sind zwei zweite Bereiche 8 vorgesehen, die von einander beabstandet an der Platine 4 angeordnet sind, während der erste Bereich 7 quasi den Rest der Platine 4 bildet. Bei der in den Fig. 1 und 2 gezeigten Ausführungsform ist die Platine 4 aus einem einzigen Blechstück 9 hergestellt, so dass die beiden Bereiche 7, 8 integrale Bestandteile der Platine 4 bzw. des Blechstücks 9 sind. Die beiden Bereiche 7, 8 charakterisieren sich bei dieser Ausführungsform außerdem dadurch, dass sie unterschiedliche Blechstärken aufweisen. Wie aus Fig. 2 entnehmbar ist, besitzen die zweiten Bereiche 8 beispielsweise eine größere Blechstärke oder Blechdicke als der erste Bereich 7.

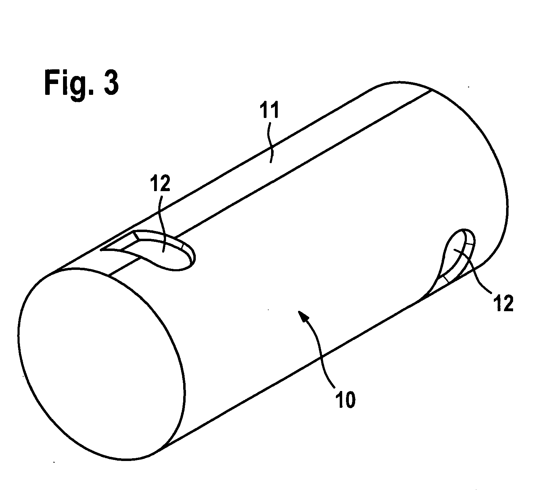

Eine derartige Platine 4, die aus einem einzigen Blechstück 9 besteht und dennoch Bereiche 7, 8 unterschiedlicher Blechstärke aufweist, kann beispielsweise durch ein spezielles Walzverfahren hergestellt werden. Denkbar ist beispielsweise die Verwendung einer in Fig. 3 gezeigten Walze 10. Diese weist an ihrer Walzkontur 11 Aussparungen 12 auf, die komplementär zu den zweiten Bereichen 8 ausgestaltet sind. Beim Auswalzen eines Platinenrohlings, der insbesondere zumindest die im zweiten Bereich 8 herrschende Blechstärke aufweist, wird nur der erste Bereich 7 zur Reduzierung der Blechstärke gewalzt. Es ist klar, dass grundsätzlich auch andere Verfahren zur Herstellung einer derartigen Platine 4, wie sie in den Fig. 1 und 2 dargestellt ist, denkbar sind.

Mit Hilfe der in den Fig. 1 und 2 gezeigten Platine 4 kann beispielsweise der in Fig. 4 gezeigte Schalenkörper 2 hergestellt werden. Durch die mit erhöhter Blechstärke ausgeführten zweiten Bereiche 8 lassen sich die Anschlussabschnitte 5 und 6 ausformen, die durch die erhöhte Blechstärke eine erhöhte Festigkeit besitzen.

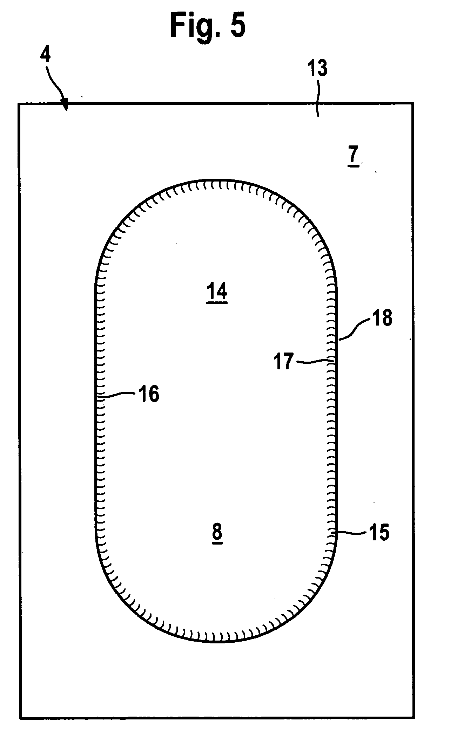

Bei der in Fig. 5 gezeigten Platine 4 ist der erste Bereich 7 durch ein erstes Blechstück 13 gebildet, während der zweite Bereich 8 durch ein zweites Blechstück 14 gebildet ist. Dabei ist das zweite Blechstück 14 mit dem ersten Blechstück 13 verschweißt. Eine entsprechende Schweißnaht ist hier mit 15 bezeichnet. Bei dieser Ausführungsform sind beispielsweise zwei Varianten denkbar. Zum einen kann sich der erste Bereich 7 und somit das erste Blechstück 13 über die gesamte Fläche der Platine 4 erstrecken, so dass das zweite Blechstück 14 auf einen Teilbereich des ersten Blechstücks 13 aufgelegt ist. Hierdurch wird eine Materialverdopplung im zweiten Bereich 8 erreicht, was die Platine 4 und somit der damit hergestellte Blechkörper 2, 3 in diesem Bereich signifikant verstärkt. Ebenso kann vorgesehen sein, den zweiten Blechkörper 14 aus einem Material herzustellen, das in besonderer Weise für Randbedingungen, z.B. chemischer und/oder thermischer Art, geeignet ist, die im Betrieb des damit hergestellten Tiefziehblechbauteils 1 in diesem Bereich auftreten. Auf eine Erhöhung der Materialstärke muss es dabei im zweiten Bereich 8 nicht ankommen.

Alternativ dazu kann das erste Blechstück 13 einen Durchbruch 16 aufweisen, der in dem in Fig. 5 gezeigten Beispiel umfangsmäßig geschlossen ist. Denkbar ist ebenfalls ein seitlicher offener Durchbruch, also ein Durchbruch, der sich bis an den Rand des ersten Blechstücks 13 erstreckt. Bei dieser Alternative ist besagter Durchbruch 16 vollständig vom zweiten Blechstück 14 ausgefüllt. Die Schweißnaht 15 verbindet dann einen Außenrand 17 des zweiten Blechstücks 14 mit einem Innenrand 18 des ersten Blechstücks 13. Auch hier kann eine besondere Adaption der Platine 4 und somit des Schalenkörpers 2, 3 und letztlich des Tiefziehblechbauteils 1 an besondere Betriebsbedingungen erzielt werden.

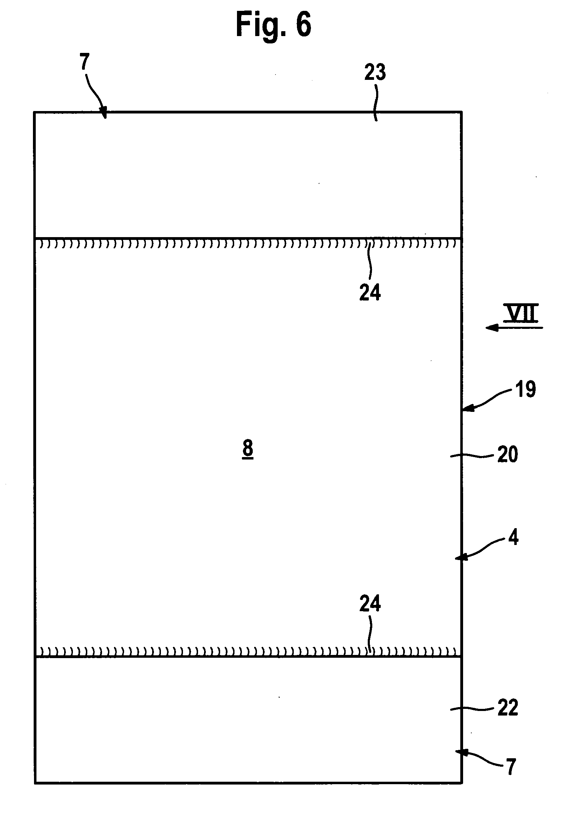

Die Fig. 6 bis 8 zeigen nun eine weitere Ausführungsform für die Platine 4. Bei dieser Ausführungsform sind beispielsweise zwei erste Bereiche 7 und ein zweiter Bereich 8 vorgesehen. Dabei erstrecken sich die beiden ersten Bereiche 7 beiderseits des zweiten Bereichs 8. Zumindest einer dieser Bereiche 7, 8 ist durch einen mehrlagigen Verband 19 gebildet. Im Beispiel ist nur der zweite Bereich 8 als mehrlagiger Verband 19 ausgestaltet. Es ist klar, dass auch grundsätzlich eine andere Konfiguration denkbar ist. Der mehrlagige Verband 19 zeichnet sich dadurch aus, dass er zumindest zwei in der Dickenrichtung der Platine 4 übereinander angeordnete Blechstücke 20, 21 aufweist. Die Blechstücke 20, 21 erstrecken sich dabei parallel zueinander. Im Unterschied dazu sind im gezeigten Beispiel die beiden erste Bereiche 7 jeweils aus nur einem Blechstück 22 bzw. 23 hergestellt. Die beiden Blechstücke 20, 21 des Verbands 19 sind mit den Blechstücken 22, 23 der beiden ersten Bereiche 7 verschweißt. Entsprechende Schweißnähte sind hier mit 24 bezeichnet.

Durch die hier gewählte Formgebung der Bereiche 7, 8 ergeben sich bevorzugt geradlinige und insbesondere durchgehende Schweißnähte 24, wodurch es möglich ist, eine derartige Platine 4 auch als Coil bereitzustellen. Um die Platine 4 bzw. den zugehörigen Coil herzustellen, kann auf das an sich bekannte Tailored-Blanks-oder Tailored-Strips-Verfahren zurückgegriffen werden. Allerdings müssen hierzu die miteinander zu verbindenden Blechstreifen nicht nur nebeneinander, sondern auch übereinander positioniert werden und dem Schweißprozess zugeführt werden, um den mehrlagigen Verband 19 ausbilden zu können.

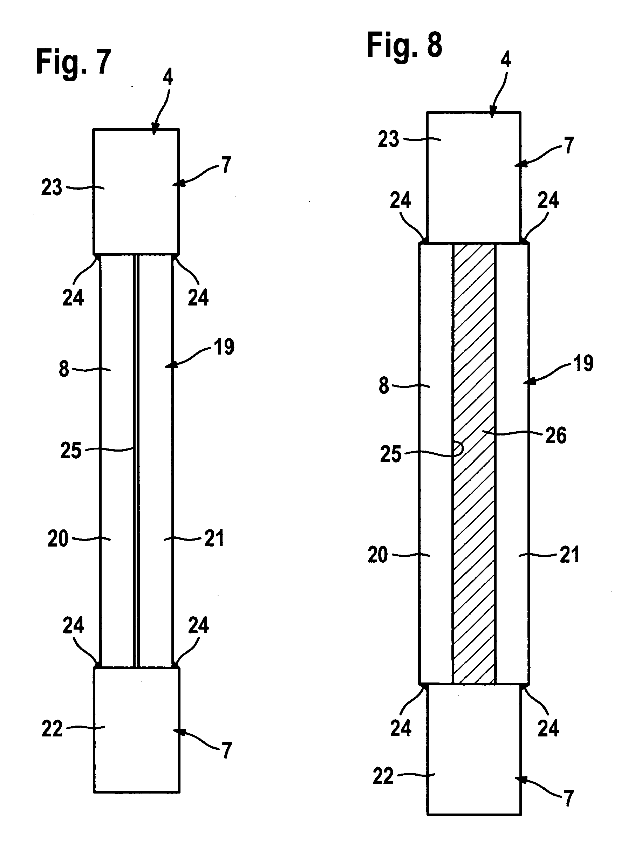

Der Verband 19 kann gemäß den Fig. 7 und 8 so aufgebaut werden, dass zwischen den beiden Blechen 20, 21 des Verbands 19 ein Abstand 25 realisiert werden kann. Ein derartiger Abstand 25 kann beispielsweise eine Luftspaltisolierung realisieren. Der Abstand 25 ist zu diesem Zweck beispielsweise in Fig. 7 vergleichsweise klein ausgebildet.

Ebenso kann besagter Abstand 25 auch dazu genutzt werden, zwischen den beiden Blechstücken 20, 21 des Verbands 19 einen Einsatz 26 anzuordnen, wodurch der Verband 19 quasi dreilagig ist. Die mittlere Lage wird dabei durch den Einsatz 26 gebildet. Hierzu kann der Abstand 25 bei der in Fig. 8 gezeigten Ausführungsform größer ausgebildet sein, als bei der in Fig. 7 gezeigten Ausführungsform.

Der Einsatz 26 muss im Unterschied zu den Blechstücken 20, 21 nicht metallisch sein. Insbesondere kann der Einsatz 26 keramisch sein. Der Einsatz 26 kann thermisch isolierend ausgestaltet sein. Ebenso ist es möglich, den Einsatz 26 wärmespeichernd und/oder schallabsorbierend und/oder schwingungsdämpfend auszugestalten. Da der Einsatz 26 zwischen den beiden Blechkörpern 20, 21 sicher verankert ist, ist eine Befestigung des Einsatzes 26 an den Blechkörpern 20, 21 des Verbands 19 entbehrlich. Ebenso ist eine Befestigung des Einsatzen 26 an einem der Blechkörper 22, 23 der beiden ersten Bereiche 7 entbehrlich. Somit kann der Einsatz 26 gegenüber den Blechkörpern 20, 21 des Verbands 19 und/oder gegenüber den Blechkörpern 22, 23 der ersten Bereiche 7 lose sein.

Fig. 9 zeigt nun ein Tiefziehblechbauteil 1 in Schalenbauweise, bei dem zumindest der dem Betrachter zugewandte Schalenkörper 2 mit Hilfe einer in den Fig. 6 bis 8 gezeigten Platine 4 hergestellt ist. Erkennbar sind die Schweißnähte 24. Die mittlere Zone des Schalenkörpers 2 ist durch den zweiten Bereich 8 gebildet, der aus dem Verband 19 besteht. In diesem Bereich kann beispielsweise eine erhöhte thermische Belastung auftreten, die durch den Verband 19 ohne weiteres aufgenommen werden kann, der zum diesem Zweck beispielsweise in besonderer Weise thermisch isolierend ausgestaltet ist.

Es ist klar, dass die hier in den Fig. 1 bis 9 gezeigten unterschiedlichen Varianten zur Ausgestaltung der Platine 4 grundsätzlich auf geeignete Weise miteinander beliebig kombinierbar sind.

## Patentansprüche

1. Tiefziehblechbauteil in Schalenbauweise, insbesondere für eine Abgasanlage, mit wenigstens einem einteiligen Schalenkörper (2, 3), der durch Tiefziehen aus einer Platine (4) hergestellt ist, die zumindest einen ersten Bereich (7) und zumindest einen zweiten Bereich (8) aufweist, wobei zumindest einer der beiden Bereiche (7, 8) durch einen mehrlagigen Verband (19) gebildet ist, der zumindest zwei übereinander angeordnete Blechstücke (20, 21) aufweist,
**dadurch gekennzeichnet,**
- **dass** zwei erste Bereiche (7) und ein zweiter Bereich (8) vorgesehen sind,
- **dass** sich die beiden ersten Bereiche (7) beiderseits des zweiten Bereichs (8) erstrecken,
- **dass** nur der zweite Bereich (8) als mehrlagiger Verband (19) ausgestaltet ist,
- **dass** die Blechstücke (20, 21) des zweiten Bereichs (8) zum Herstellen der Platine (4) mit den Blechstücken (22, 23) der beiden ersten Bereiche (7) verschweißt sind,
- **dass** der Verband (19) zwischen den beiden Blechstücken (20, 21) des zweiten Bereichs (8) einen Abstand aufweist.

2. Tiefziehblechbauteil nach Anspruch 1,
**dadurch gekennzeichnet,**
**dass** der Verband (19) zwischen den beiden Blechstücken (20, 21) des jeweiligen Bereichs (7, 8) zumindest eine Lage aus einem Einsatz (26) aufweist.

3. Tiefziehblechbauteil nach Anspruch 2,
**dadurch gekennzeichnet,**
**dass** der Einsatz (26) nicht metallisch ist.

4. Tiefziehblechbauteil nach Anspruch 2 oder 3,
**dadurch gekennzeichnet,**
**dass** der Einsatz (26) keramisch ist.

5. Tiefziehblechbauteil nach Anspruch 2 bis 4,
**dadurch gekennzeichnet,**
**dass** der Einsatz (26) thermisch isolierend ist.

6. Tiefziehblechbauteil nach Anspruch 2 bis 5,
**dadurch gekennzeichnet,**
**dass** der Einsatz (26) ein Wärmespeichermaterial ist.

7. Tiefziehblechbauteil nach Anspruch 2 bis 6,
**dadurch gekennzeichnet,**
**dass** der Einsatz (26) schallabsorbierend ist.

8. Tiefziehblechbauteil nach Anspruch 2 bis 7,
**dadurch gekennzeichnet,**
**dass** der Einsatz (26) schwingungsdämpfend ist.

9. Tiefziehblechbauteil nach Anspruch 2 bis 8,
**dadurch gekennzeichnet,**
**dass** der Einsatz (26) gegenüber den Blechkörpern (20, 21) des zugehörigen Bereichs (7, 8) und/oder gegenüber dem Blechkörper (22, 23) oder den Blechkörpern (22, 23) des jeweils anderen Bereichs (7, 8) lose ist.

10. Tiefziehblechbauteil nach einem der Ansprüche 1 bis 9,
**dadurch gekennzeichnet,**
**dass** der jeweils andere Bereich (7, 8) einlagig ist und nur einen Blechkörper (22, 23) aufweist, an dem die wenigstens zwei Blechkörper (20, 21) des Verbands (19) angeschweißt sind.

11. Tiefziehblechbauteil nach Anspruch 10,
**dadurch gekennzeichnet,**
**dass** zumindest zwei einlagige Bereiche (7) vorgesehen sind, die beiderseits des mehrlagigen Bereichs (8) angeordnet sind, wobei bei beiden einlagigen Bereichen (7) jeweils das eine Blechstück (22, 23) mit den Blechstücken (20, 21) des mehrlagigen Verbands (8) verschweißt ist.

12. Platine zur Herstellung eines Tiefziehblechbauteils (1) nach einem der Ansprüche 1 bis 11.

13. Coil zur Herstellung von Platinen (4) nach Anspruch 12.

## Claims

1. A deep-drawn sheet component in shell design, more preferably for an exhaust system, with at least one one-piece shell body (2, 3) produced through deep-drawing from a blank (4), which at least comprises a first region (7) and at least a second region (8), wherein at least one of the two regions (7, 8) is formed through a multi-layer bond (19), comprising at least two sheet pieces (20, 21) arranged on top of each other,
**characterized in that**
- two first regions (7) and a second region (8) are provided,
- that the two first regions (7) extend on both sides of the second region (8),
- that only the second region (8) is embodied as multi-layer bond (19),
- that the sheet pieces (20, 21) of the second region (8) for producing the blank (4) are welded to the sheet pieces (22, 23) of the two first regions (7),
- that the bond (19) between the two sheet pieces (20, 21) of the second region (8) has a spacing.

2. The deep-drawn sheet component according to Claim 1,
**characterized in that**
the bond (19) between the two sheet pieces (20, 21) of the respective region (7, 8) comprises at least one layer of an insert (26).

3. The deep-drawn sheet component according to Claim 2,
**characterized in that**
the insert (26) is not of metal.

4. The deep-drawn sheet component according to Claim 2 or 3,
**characterized in that**
the insert (26) is ceramic.

5. The deep-drawn sheet component according to Claim 2 to 4,
**characterized in that**
the insert (26) is thermally insulating.

6. The deep-drawn sheet component according to Claim 2 to 5,
**characterized in that**
the insert (26) is a heat storage material.

7. The deep-drawn sheet component according to Claim 2 to 6,
**characterized in that**
the insert (26) is sound absorbent.

8. The deep-drawn sheet component according to Claim 2 to 7,
**characterized in that**
the insert (26) is vibration damping.

9. The deep-drawn sheet component according to Claim 2 to 8,
**characterized in that**
the insert (26) is loose relative to the sheet elements (20, 21) of the corresponding region (7, 8) and/or relative to the sheet element (22, 23) or the sheet elements (22, 23) of the respective other region (7, 8).

10. The deep-drawn sheet component according to any one of the Claims 1 to 9,
**characterized in that**
the respective other region (7, 8) is of a single layer and comprises only a sheet element (22, 23) to which the at least two sheet elements (20, 21) of the bond (19) are welded.

11. The deep-drawn sheet component according to Claim 10,
**characterized in that**
at least two-single layer regions (7) are provided which are arranged on both sides of the multi-layer region (8), wherein at both single-layer regions (7) in each case the one sheet piece (22, 23) is welded to the sheet pieces (20, 21) of the multi-layer bond (8).

12. A blank for producing a deep-drawn sheet component (1) according to any one of the Claims 1 to 11.

13. A coil for producing blanks (4) according to Claim 12.

## Revendications

1. Élément de construction en tôle d'emboutissage en construction monocoque, en particulier pour une installation d'échappement, comprenant au moins un corps de coque (2, 3) monobloc, qui est fabriqué par emboutissage à partir d'une platine (4), laquelle présente au moins une première zone (7) et au moins une seconde zone (8), au moins l'une des deux zones (7, 8) étant formée par un assemblage (19) multicouche, qui présente au moins deux parties en tôle (20, 21) superposées,
**caractérisé en ce que**
- au moins deux premières zones (7) et une seconde zone (8) sont prévues,
- **en ce que** les deux premières zones (7) s'étendent des deux côtés de la seconde zone (8),
- **en ce que** seule la seconde zone (8) est conçue comme assemblage (19) multicouche,
- **en ce que** les parties en tôle (20, 21) de la seconde zone (8) sont soudées pour la fabrication de la platine (4) avec les parties en tôle (22, 23) des deux premières zones (7),
- **en ce que** l'assemblage (19) entre les deux parties en tôle (20, 21) de la seconde zone (8) présente un espacement.

2. Élément de construction en tôle d'emboutissage selon la revendication 1,
**caractérisé en ce que**
l'assemblage (19) entre les deux parties en tôle (20, 21) de la zone (7, 8) respective présente au moins une couche à base d'un insert (26).

3. Élément de construction en tôle d'emboutissage selon la revendication 2,
**caractérisé en ce que**
l'insert (26) n'est pas métallique.

4. Élément de construction en tôle d'emboutissage selon la revendication 2 ou 3,
**caractérisé en ce que**
l'insert (26) est céramique.

5. Élément de construction en tôle d'emboutissage selon les revendications 2 à 4,
**caractérisé en ce que**
l'insert (26) est thermiquement isolant.

6. Élément de construction en tôle d'emboutissage selon les revendications 2 à 5,
**caractérisé en ce que**
l'insert (26) est un matériau accumulateur de chaleur.

7. Élément de construction en tôle d'emboutissage selon les revendications 2 à 6,
**caractérisé en ce que**
l'insert (26) absorbe les bruits.

8. Élément de construction en tôle d'emboutissage selon les revendications 2 à 7,
**caractérisé en ce que**
l'insert (26) amortit les vibrations.

9. Élément de construction en tôle d'emboutissage selon les revendications 2 à 8,
**caractérisé en ce que**
l'insert (26) est amovible par rapport aux corps en tôle (20, 21) de la zone (7, 8) associée et/ou par rapport au corps en tôle (22, 23) ou aux corps en tôle (22, 23) de l'autre zone (7, 8) respective.

10. Élément de construction en tôle d'emboutissage selon l'une quelconque des revendications 1 à 9,
**caractérisé en ce que**
l'autre zone (7, 8) respective est monocouche et ne présente qu'un corps en tôle (22, 23), sur lequel les au moins deux corps en tôle (20, 21) de l'assemblage (19) sont soudés.

11. Élément de construction en tôle d'emboutissage selon la revendication 10,
**caractérisé en ce que**
au moins deux zones (7) monocouche sont prévues, lesquelles sont disposées des deux côtés de la zone (8) multicouche, à chaque fois l'une des parties en tôle (22, 23) étant soudée, sur les deux zones (7) monocouche, avec les parties en tôle (20, 21) de l'assemblage (8) multicouche.

12. Platine pour fabriquer un élément de construction en tôle d'emboutissage (1) selon l'une quelconque des revendications 1 à 11.

13. Bobine pour fabriquer des platines (4) selon la revendication 12.
